# EUROPEAN PATENT SPECIFICATION

(11) **EP 4 098 471 B1**
(45) Date of publication and mention of the grant of the patent: **21.02.2024**
(21) Application number: 21214921.5
(22) Date of filing: 15.12.2021
(51) Int. Cl.: B60K 37/06, G07C 5/08, G05D 1/02, H04W 4/44

(54) **METHOD AND APPARATUS FOR PROCESSING IMAGE DISPLAY OF REMOTE COCKPIT, COCKPIT, AND SYSTEM**
VERFAHREN UND VORRICHTUNG ZUR VERARBEITUNG DER BILDANZEIGE EINES FERNGESTEUERTEN COCKPITS, COCKPIT UND SYSTEM
PROCÉDÉ ET APPAREIL DE TRAITEMENT D'AFFICHAGE D'IMAGE DE COCKPIT À DISTANCE, COCKPIT ET SYSTÈME

(30) Priority: 04.06.2021 CN 202110625629
(43) Date of publication of application: 07.12.2022
(73) Proprietor: Guangzhou Xiaopeng Motors Technology Co., Ltd., Guangzhou, Guangdong 510000 (CN)
(72) Inventor: Li, Guiliang, Guangzhou (CN)
(74) Representative: Ran, Handong

(56) References cited:
- EP-A1- 3 175 693
- US-A1- 2006 224 280

## Description

### TECHNICAL FIELD

The present invention relates to the field of electric vehicle technologies, and more particularly, to a method for processing image display of a remote cockpit, an apparatus for processing image display of a remote cockpit, a cockpit, and a system.

### BACKGROUND

Currently, with the continuous development of intellectualization of vehicles, an autonomous driving technology has gradually been widely used, and a remote driving technology has emerged.

A remote driving system is mainly composed of a cloud end cockpit, a controlled running vehicle and a communication network. The cloud end cockpit mainly includes a Personal Computer (PC) host, a display, a steering wheel, an accelerator pedal, and a brake pedal. The controlled running vehicle uploads various in-vehicle sensor data and current vehicle state data to the cloud end cockpit via a 5-th Generation (5G) communication network. A cloud end driver can observe the vehicle state data and a vehicle environment video from a display of the cloud end cockpit, and control the steering wheel, the accelerator pedal, the brake pedal of the cloud end cockpit, etc. The PC host issues corresponding remote control instructions to the controlled running vehicle. In this way, remote driving is realized. EP3175693A1 discloses a remote control apparatus capable of communicating with a control apparatus of an autonomously running work vehicle via a communication apparatus. US20060224280A1 discloses a remote control system for remotely controlling a vehicle that includes a pair of hand controls to be engaged by hands of a user.

However, in the related art, due to a time delay in a process of uploading the vehicle environment video, a driving control result of the cloud end driver can only be displayed in the display of the cloud end cockpit after waiting for a certain time period, and thus the cloud end driver may suffer from vertigo, which not only severely affects cloud driving experience, but also compromises remote driving safety of the vehicle.

### SUMMARY

In order to solve or partially solve problems in the related art, the present invention provides a method for processing image display of a remote cockpit, an apparatus for processing image display of a remote cockpit, a cockpit, and a system, capable of reducing or eliminating vertigo of a cloud end driver, enhancing cloud end driving experience, and improving safety performance of remote driving of a vehicle.

In a first aspect of the present invention, a method for processing image display of a remote cockpit is provided. The method includes: obtaining a vehicle state and an original image uploaded by a vehicle, processing the original image, and displaying the processed original image as a display image in a display of the remote cockpit; and performing different movement processings on the display image in the display of the remote cockpit based on the vehicle state and monitored different states of a vehicle control module in the remote cockpit.

In an implementation, the vehicle control module includes a steering wheel, an accelerator pedal, and a brake pedal.

In an implementation, said processing the original image, and displaying the processed original image as the display image in the display of the remote cockpit includes displaying an image of a specific region of the original image as the display image in the display of the remote cockpit.

In an implementation, said performing the different movement processings on the display image in the display of the remote cockpit based on the vehicle state and the monitored different states of the vehicle control module in the remote cockpit includes: in a running state or a stationary state of the vehicle, in response to monitoring that the steering wheel in the remote cockpit is kept straight ahead and the accelerator pedal in the remote cockpit is depressed, moving the display image upwards when the vehicle is in a D gear, and moving the display image downwards when the vehicle is in an R gear; or in the running state of the vehicle, in response to monitoring that the steering wheel in the remote cockpit is kept straight ahead and the brake pedal in the remote cockpit is depressed, moving the display image downwards when the vehicle is in the D gear, and moving the display image upwards when the vehicle is in the R gear; or in the running state of the vehicle, moving, when the vehicle is in the D gear and in response to monitoring that the steering wheel in the remote cockpit is rotated in a set direction, the display image in the set direction, and moving, when the vehicle is in the R gear and in response to monitoring that the steering wheel in the remote cockpit is rotated in the set direction, the display image in a direction opposite to the set direction.

In an implementation, the method further includes: after the accelerator pedal is depressed, stopping moving the display image when a position of the accelerator pedal is maintained, and moving the display image along a historical movement trajectory in a reverse direction when the accelerator pedal is released; or after the brake pedal is depressed, stopping moving the display image when a position of the brake pedal is maintained, moving the display image along a historical movement trajectory in a reverse direction when the brake pedal is released and the vehicle is still in the running state, stopping moving the display image when the vehicle has entered a stop state, and directly restoring the display image to an initial state when the brake pedal is completely released; or after the steering wheel is rotated in the set direction, stopping moving the display image when a position of the steering wheel is maintained, and moving the display image along a historical movement trajectory in a reverse direction when the steering wheel is reset in an opposite direction.

In an implementation, when the accelerator pedal is fully depressed, an upper edge of the display image coincides with an upper edge of the original image when the vehicle is in the D gear, and a lower edge of the display image coincides with a lower edge of the original image when the vehicle is in the R gear; or when the brake pedal is fully depressed, the lower edge of the display image coincides with the lower edge of the original image when the vehicle is in the D gear, and the upper edge of the display image coincides with the upper edge of the original image when the vehicle is in the R gear; or when the steering wheel is rotated in a set direction by a maximum angle, an edge of the display image in the set direction coincides with an edge of the original image in the set direction when the vehicle is in the D gear, and the edge of the display image in the set direction coincides with an edge of the original image in a direction opposite to the set direction when the vehicle is in the R gear.

In an implementation, in the running state of the vehicle, when the steering wheel and the accelerator pedal move simultaneously, a movement amount of the display image is a sum of a vector of a movement amount of the steering wheel and a vector of a movement amount of the accelerator pedal; or in the running state of the vehicle, when the steering wheel and the brake pedal move simultaneously, a movement amount of the display image is a sum of a vector of a movement amount of the steering wheel and a vector of a movement amount of the brake pedal.

In an implementation, a movement duration of the display image is equal to a state change duration of the steering wheel, the accelerator pedal, or the brake pedal.

In an implementation, the method further includes distorting, rotating, or scaling the display image when the display image is in movement.

In a second aspect of the present invention, an apparatus for processing image display of a remote cockpit is provided. The apparatus includes: an obtaining and display module configured to obtain a vehicle state and an original image uploaded by a vehicle, process the original image, and display the processed original image as a display image in a display of the remote cockpit; and a processing module configured to perform different movement processings on the display image in the display of the remote cockpit based on the vehicle state obtained by the obtaining and display module and monitored different states of a vehicle control module in the remote cockpit.

In an implementation, the vehicle control module includes a steering wheel, an accelerator pedal, and a brake pedal. The processing module includes: a first processing sub-module configured to, in a running state or a stationary state of the vehicle, in response to monitoring that the steering wheel in the remote cockpit is kept straight ahead and the accelerator pedal in the remote cockpit is depressed, move the display image upwards when the vehicle is in a D gear, and move the display image downwards when the vehicle is in an R gear; or a second processing sub-module configured to, in the running state of the vehicle, in response to monitoring that the steering wheel in the remote cockpit is kept straight ahead and the brake pedal in the remote cockpit is depressed, move the display image downwards when the vehicle is in the D gear, and move the display image upwards when the vehicle is in the R gear; or a third processing sub-module configured to, in the running state of the vehicle, move, when the vehicle is in the D gear and in response to monitoring that the steering wheel in the remote cockpit is rotated in a set direction, the display image in the set direction, and move, when the vehicle is in the R gear and in response to monitoring that the steering wheel in the remote cockpit is rotated in the set direction, the display image in a direction opposite to the set direction.

In a third aspect of the present invention, a cockpit is provided. The cockpit includes a host, a display, and a vehicle control module. The host is configured to obtain a vehicle state and an original image uploaded by a vehicle, process the original image, and display the processed original image as a display image in the display of the cockpit; and perform different movement processings on the display image in the display based on the vehicle state and monitored different states of the vehicle control module in the cockpit. The display is configured to display the display image.

In an implementation, the vehicle control module includes a steering wheel, an accelerator pedal, and a brake pedal. The host is configured to, in a running state or a stationary state of the vehicle, in response to monitoring that the steering wheel in the cockpit is kept straight ahead and the accelerator pedal in the cockpit is depressed, move the display image upwards when the vehicle is in a D gear, and move the display image downwards when the vehicle is in an R gear; or in the running state of the vehicle, in response to monitoring that the steering wheel in the cockpit is kept straight ahead and the brake pedal in the cockpit is depressed, move the display image downwards when the vehicle is in the D gear, and move the display image upwards when the vehicle is in the R gear; or in the running state of the vehicle, move, when the vehicle is in the D gear and in response to monitoring that the steering wheel in the cockpit is rotated in a set direction, the display image in the set direction, and move, when the vehicle is in the R gear and in response to monitoring that the steering wheel in the cockpit is rotated in the set direction, the display image in a direction opposite to the set direction.

In a fourth aspect of the present invention, a remote driving system is provided. The remote driving system includes a vehicle and the above-mentioned cockpit.

In a fifth aspect of the present invention, a non-transitory machine-readable storage medium having executable codes stored thereon is provided. The executable codes, when executed by a processor of an electronic device, cause the processor to perform the method as described above.

Technical solutions provided by the present invention can provide the following advantageous effects.

According to the solutions provided by the present invention, different movement processings can be performed on the display image in the display based on the vehicle state and monitored different states of the vehicle control module in the cockpit. In this way, the image in the display can move immediately with a state change of the vehicle control module such as the steering wheel, the accelerator pedal, and the brake pedal. Moving the image immediately with a change of a control state can effectively alleviate vertigo of the cloud end driver in the related art, thereby reducing or eliminating vertigo of the cloud end driver, enhancing the cloud end driving experience, and improving the safety performance of the remote driving of the vehicle.

Further, according to the solutions provided by the present invention, an image of a specific region of the original image can be displayed in the display of the cockpit as the display image. That is, an image displayed in the display of the cockpit is an image of a specific region of the original image captured by the vehicle, e.g., a central region, and thus the image can be moved immediately with a state change of the accelerator pedal or the like, and an image of a region, which is on a periphery of the specific region and is not displayed, can be instantly switched into a display region. Without a reserved peripheral region, the entire display region may become smaller when the display image moves, which may confuse the cloud end driver. Therefore, by reserving the peripheral region and displaying only the specific region, e.g., the central region, of the original image, this problem can be avoided or resolved to a certain extent, thereby further improving the cloud end driving experience.

Further, according to the solutions provided by the present invention, a condition for moving a display image in the display may be a state change of any of the steering wheel, the accelerator pedal, or the brake pedal, or a change of any combination of the steering wheel, the accelerator pedal, or the brake pedal, which can adapt to various application scenarios.

It should be understood that the above general description and the following detailed description are only exemplary and explanatory, and cannot limit the present invention.

### BRIEF DESCRIPTION OF DRAWINGS

The above and other objects, features and advantages of the present invention will become more apparent by illustrating exemplary embodiments of the present invention in further detail with reference to the accompanying drawings. In the exemplary embodiments of the present invention, the same reference numerals generally represent the same components.
FIG. 1 illustrates a flowchart of a method for processing image display of a remote cockpit according to an embodiment of the present invention;
FIG. 2 is a schematic diagram showing a controlled vehicle and a hardware framework of a cockpit according to an embodiment of the present invention;
FIG. 3 is a schematic diagram showing a positional relationship between an image of a central region and an original image and movement of the image of the central region according to an embodiment of the present invention;
FIG. 4 illustrates a flowchart of a method for processing image display of a remote cockpit according to another embodiment of the present invention;
FIG. 5 illustrates a flowchart of a method for processing image display of a remote cockpit according to yet another embodiment of the present invention;
FIG. 6 illustrates a flowchart of a method for processing image display of a remote cockpit according to still yet another embodiment of the present invention;
FIG. 7 illustrates a flowchart of a method for processing image display of a remote cockpit according to still yet another embodiment of the present invention;
FIG. 8 illustrates a flowchart of a method for processing image display of a remote cockpit according to still yet another embodiment of the present invention;
FIG. 9 is a schematic diagram showing a structure of an apparatus for processing image display of a remote cockpit according to an embodiment of the present invention;
FIG. 10 is a schematic diagram showing a structure of an apparatus for processing image display of a remote cockpit according to another embodiment of the present invention;
FIG. 11 is a schematic diagram showing a structure of a cockpit according to an embodiment of the present invention; and
FIG. 12 is a schematic diagram showing a structure of a remote driving system according to an embodiment of the present invention.

### DESCRIPTION OF EMBODIMENTS

Some embodiments of the present invention will be described in detail below with reference to the accompanying drawings. Although some embodiments of the present invention are illustrated in the drawings, it should be understood that the present invention may be embodied in various forms and should not be construed as being limited to the embodiments set forth herein. Instead, these embodiments are provided for a complete and thorough understanding of the present invention, and these embodiment can fully convey the scope of the present invention to those skilled in the art.

Terms used in the present invention are only for a purpose of describing specific embodiments, and are not intended to limit the present invention. Singular forms of "a", "said" and "the" used in the present invention and the appended claims also include plural forms, unless the context clearly indicates other meanings. It should also be understood that the term "and/or" as used herein refers to inclusion of any or all possible combinations of one or more associated listed items.

It should be understood that although terms "first", "second", "third", etc. may be used in the present invention to describe various information, the information should not be limited to these terms. These terms are only used to distinguish the same type of information from each other. For example, without departing from the scope of the present invention, first information may also be referred to as second information. Similarly, the second information may also be referred to as the first information. Therefore, features defined with "first" and "second" may explicitly or implicitly include one or more of these features. In the description of the present invention, "a plurality of" means two or more, unless otherwise specifically defined.

In the related art, a cloud end driver may have a feel of vertigo, which not only severely affects cloud end driving experience, but also compromises remote driving safety of the vehicle. Regarding the above problems, the embodiments of the present invention provide a method for processing image display of a remote cockpit, which can reduce or eliminate vertigo of the cloud end driver, enhance cloud end driving experience, and improve safety performance of remote driving of a vehicle.

Technical solutions of the embodiments of the present invention will be described in detail below with reference to the accompanying drawings.

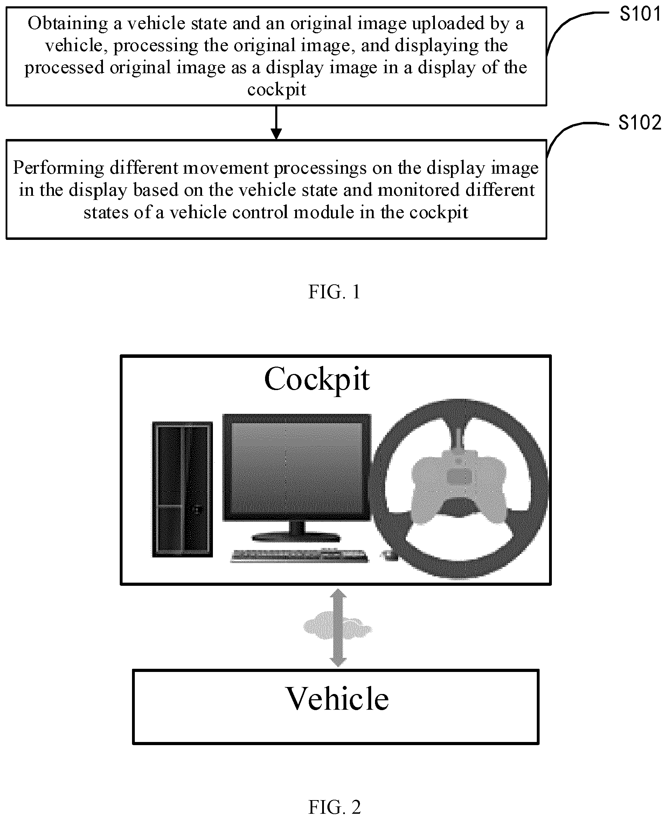

FIG. 1 illustrates a flowchart of a method for processing image display of a remote cockpit according to an embodiment of the present invention.

Referring to FIG. 1, the method includes the following steps.

In step S101, a vehicle state and an original image uploaded by a vehicle are obtained, the original image is processed, and the processed original image is displayed as a display image in a display of the cockpit.

The cockpit can obtain, via a 5G communication network, the vehicle state and the original image uploaded by the vehicle as well as various in-vehicle sensor data uploaded by the vehicle. Then, the original image is processed, and the processed original image is displayed as the display image in the display of the cockpit.

In this step, an image of a specific region of the original image can be displayed as the display image in the display of the cockpit. For example, the image of the specific region may be but is not limited to an image of a central region.

In step S102, different movement processings are performed on the display image in the display based on the vehicle state and monitored different states of a vehicle control module in the cockpit.

Here, the vehicle control module may include but is not limited to a steering wheel, an accelerator pedal, a brake pedal, etc.

In this step, in a running state or a stationary state of the vehicle, in response to monitoring that the steering wheel in the cockpit is kept straight ahead and the accelerator pedal in the cockpit is depressed, the display image is moved upwards when the vehicle is in a D gear, and the display image is moved downwards when the vehicle is in an R gear; or in the running state of the vehicle, in response to monitoring that the steering wheel in the cockpit is kept straight ahead and the brake pedal in the cockpit is depressed, the display image is moved downwards when the vehicle is in the D gear, and the display image is moved upwards when the vehicle is in the R gear; or in the running state of the vehicle, when the vehicle is in the D gear and in response to monitoring that the steering wheel in the cockpit is rotated in a set direction, the display image is moved in the set direction, and when the vehicle is in the R gear and in response to monitoring that the steering wheel in the cockpit is rotated in the set direction, the display image is moved in a direction opposite to the set direction.

Here, a movement duration of the display image is equal to a state change duration of the steering wheel, the accelerator pedal, or the brake pedal.

In addition, when the controlled vehicle is in the stationary state, any rotation of the steering wheel and depression of the brake pedal generally do not cause a movement of the image of the central region. If the state of the steering wheel, the accelerator pedal, or the brake pedal does not change, the image of the central region does not move, either.

It can be seen from this embodiment that, according to the solution provided by this embodiment of the present invention, different movement processings can be performed on the display image in the display based on the vehicle state and the monitored different states of the vehicle control module in the cockpit. In this way, the image in the display move immediately with a state change of the vehicle control module such as the steering wheel, the accelerator pedal, or the brake pedal. Moving the image immediately with a change of a control state can effectively alleviate the feel of vertigo of the cloud end driver in the related art, thereby reducing or eliminating vertigo of the cloud end driver, enhancing the cloud end driving experience, and improving the safety performance of the remote driving of the vehicle.

FIG. 2 is a schematic diagram showing a controlled vehicle and a hardware framework of a cockpit according to an embodiment of the present invention. The cockpit in the embodiment of the present invention may be a cloud end cockpit.

Referring to FIG. 2, a wireless connection is established between the cockpit and the vehicle. In this embodiment, the wireless connection can be established between the cockpit and the vehicle based on the 5G communication network. The cockpit may include a host, the display, and the vehicle control module. The vehicle control module may include the steering wheel, the accelerator pedal, and the brake pedal, etc. The controlled vehicle uploads various in-vehicle sensor data and current vehicle state data to the cockpit via the 5G communication network. Here, the in-vehicle sensor data may include data from a camera, an ultrasound radar, a millimeter wave radar, a laser radar, etc.; and the current vehicle state data may include data such as a gear position, a speed, and a rotation angle of the steering wheel. Here, the host may be a PC host. The controlled vehicle uploads the original image and vehicle condition data that are outputted by an in-vehicle camera to the cockpit in real time via the wireless network. The vehicle condition data can include the in-vehicle sensor data and the vehicle state data. The host in the cockpit processes the original image and outputs the image of the central region to the display. The host monitors states of the steering wheel, the accelerator pedal, and the brake pedal in real time, and controls the image of the central region to move accordingly with movements of the steering wheel, the accelerator pedal, the brake pedal, and the like. The host collects movements and state data of the steering wheel, the accelerator pedal, the brake pedal, and the like simultaneously, and issues a corresponding remote control instruction to the controlled vehicle, thereby realizing remote control of the vehicle.

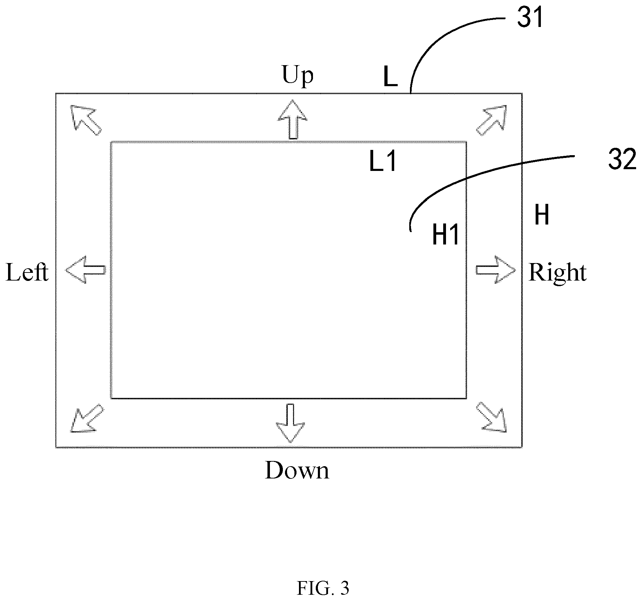

FIG. 3 is a schematic diagram showing a positional relationship between an image of a central region and an original image and movement of the image of the central region according to an embodiment of the present invention.

Referring to FIG. 3, in this embodiment, an image of a specific region of an original image 31 uploaded by the vehicle is displayed as the display image in the display of the cockpit. Here, the specific region may be a central region 32 of the original image 31, and thus the image of the specific region may be referred to as a central region image. An image of partial regions on the top, bottom, left and right of the original image 31 is proportionally reserved and not outputted to the display. That is, the original image 31 displays an image uploaded by the in-vehicle camera of the controlled vehicle, the specific region, e.g., the central region 32, may be a part of the original image 31, and the central region 32 is outputted to the display of the cockpit.

Assuming that a length, a width, and a length-to-width ratio of the original image 31 are L, H, and L/H, respectively, where L/H=9/16; and a length, a width, and an length-to-width ratio of the central region 32 outputted to the display are L1, H1, and L1/H1, respectively, where L1/H1=9/16. Lengths and widths of left and right reserved regions outside the central region 32 are both H and (L-L1)/2, respectively. Lengths and widths of upper and lower reserved regions outside the central region 32 are both L and (H-H1)/2, respectively. It should be noted that the above-mentioned numerical values are only examples, and the present invention is not limited to any of these examples. Arrow directions in FIG. 3 illustrate eight directions in which the central region 32 moves, which are an upward direction, a downward direction, a direction to the left, a direction to the right, a direction to the upper left, a direction to the lower left, a direction to the upper right, and a direction to the lower right.

In practical applications, possible movement directions of the central region 32 are unlimited. Assuming that a maximum stroke of the accelerator pedal is M and a maximum left rotation angle of the steering wheel is W, if the accelerator pedal goes from zero to M1 and simultaneously to this, the steering wheel is rotated to the left by W1, then the central region 32 moves upwards by (M1/M)*(H-H1)/2, and move to the left by (W1/W)*(L-L1)/2.

It can be seen from FIG. 3 that the present invention provides a solution of displaying the image of the specific region of the original image as the display image in the display of the cockpit. That is, the image displayed on the display of the cockpit is a specific partial region, e.g., a central region of the original image captured by the vehicle, such that the image can be moved immediately when the state of the accelerator pedal or the like is changed, and a partial image, which is on a periphery of the specific region and is not displayed, can be instantly switched into the display region. Without a reserved peripheral part, the entire display region would become smaller when the display image moves, which may confuse the cloud end driver. Therefore, by reserving the peripheral part and displaying only a specific partial region, e.g., the central region of the original image, the problem can be avoided or solved to a certain extent, thereby further improving the cloud end driving experience.

Procedures of the method for processing the image display of the remote cockpit according to the embodiments of the present invention are further introduced below.

In the following embodiments, the host is the PC host as an example, the vehicle control module is provided in the cockpit, and the vehicle control module may include the steering wheel, the accelerator pedal, and the brake pedal. Here, the image of the specific region of the original image, such as the image of the central region, is displayed as the display image in the display of the cockpit. The display image is collectively referred to as the image of the central region hereinafter.

Here, when the controlled vehicle is in the stationary state, any rotation of the steering wheel and depression of the brake pedal generally do not cause the movement of the image of the central region. If the states of the steering wheel, the accelerator pedal, and the brake pedal do not change, the image of the central region does not move, either. During the movement of the image of the central region, a content of each frame of the image still comes from a content of a latest image uploaded by the in-vehicle camera. The movement duration of the image of the central region is equal to the state change duration of the steering wheel, the accelerator pedal, or the brake pedal. In addition, in practical applications, possible movement directions of the image of the central region are unlimited, and each possible movement direction can be a sum of characterization vectors representing multiple parameters.

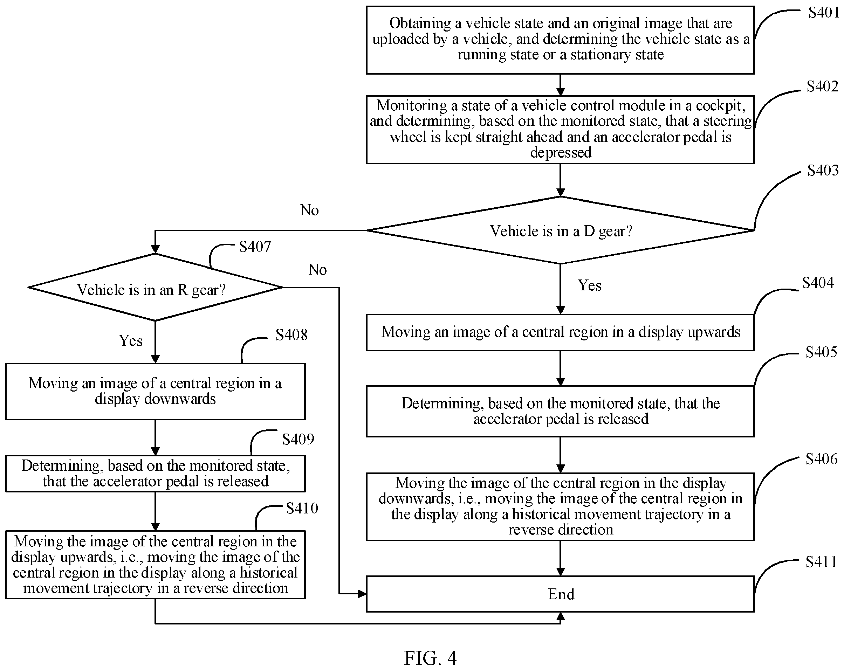

FIG. 4 illustrates a flowchart of a method for processing image display of a remote cockpit according to another embodiment of the present invention. In this embodiment, the image of the central region in the display moves with a movement of the accelerator pedal.

Referring to FIG. 4, the method includes the following steps.

In step S401, a vehicle state and an original image that are uploaded by a vehicle are obtained, and the vehicle state is determined as a running state or a stationary state.

The cockpit can obtain the vehicle state and the original image that are uploaded by the vehicle via the 5G communication network such as the wireless network. The controlled vehicle, which generally can be connected to the Internet via the wireless network, can not only upload images from the in-vehicle camera and the vehicle condition data to the cockpit, but also receive remote control instructions from the cockpit to complete driving and other actions. Here, the vehicle condition data can include various in-vehicle sensor data and the current vehicle state data, the in-vehicle sensor data can include data from a camera, an ultrasound radar, a millimeter wave radar, a laser radar, etc., and the current vehicle state data can include data such as a gear position, a speed, and a rotation angle of the steering wheel.

The cockpit can determine that the vehicle is in the running state or the stationary state based on the current vehicle state data of the vehicle. For example, when the vehicle is in a P gear and has a speed that is 0, the vehicle is generally in the stationary state; and when the vehicle is in a D gear or an R gear, and has a speed that is greater than 0, the vehicle is generally in the running state.

It should be noted that the embodiments of the present invention do not limit an encoding format of and a transmission protocol used for the image uploaded by the controlled vehicle, as long as the PC host in the cockpit can restore the original image of the in-vehicle camera after certain processing.

In step S402, a state of a vehicle control module in a cockpit is monitored, and it is determined based on the monitored state that a steering wheel is kept straight ahead and an accelerator pedal is depressed.

Here, states of the steering wheel, the accelerator pedal, and the brake pedal in the cockpit can be monitored in real time through the PC host in the cockpit to obtain operations performed by the steering wheel, the accelerator pedal, and the brake pedal. In this embodiment, it is determined based on a monitoring result that in the cockpit, the steering wheel in the cockpit is kept straight ahead and the accelerator pedal in the cockpit is depressed. The real-time monitoring may be periodic monitoring, e.g., monitoring is performed every 10 milliseconds.

In step S403, whether the vehicle is in a D gear is determined; when the vehicle is in the D gear, step S404 is executed; and when the vehicle is not in the D gear, step S407 is executed.

In step S404, an image of a central region in a display is moved upwards.

According to the above steps, in response to determining that the controlled vehicle is in the stationary state or the running state, the steering wheel is kept straight ahead, the accelerator pedal is depressed, and the vehicle is in the D gear, the image of the central region is moved upwards to present moving visual effects of a forward movement and acceleration; when a position of the accelerator pedal is maintained, the image of the central region may stop moving; and when the accelerator pedal is fully depressed, an upper edge of the image of the central region can coincide with an upper edge of the original image.

In step S405, it is determined based on the monitored state that the accelerator pedal is released.

According to a result of real-time monitoring, it is determined that the accelerator pedal in the cockpit is released.

In step S406, the image of the central region in the display is moved downwards, i.e., moved along a historical movement trajectory in a reverse direction, and step S411 is executed.

During a releasing process of the accelerator pedal, the image of the central region is moved along a previous movement trajectory, i.e., the historical movement trajectory, in the reverse direction. Since the previous historical movement trajectory is an upward movement trajectory, the image of the central region is moved downwards in this case.

In step S407, whether the vehicle is in an R gear is determined; when the vehicle is in the R gear, step S408 is executed; and when the vehicle is not in the R gear, step S411 is executed.

In step S408, an image of the central region in a display is moved downwards.

According to the above steps, in response to determining that the controlled vehicle is in the stationary state or the running state, the steering wheel is kept straight ahead, the accelerator pedal is depressed, and the vehicle is in the R gear, the image of the central region is moved downwards to present moving visual effects of backing and acceleration. When the position of the accelerator pedal is maintained, the image of the central region also stops moving; and when the accelerator pedal is fully depressed, the upper edge of the image of the central region can coincide with the upper edge of the original image.

In step S409, it is determined based on the monitored state that the accelerator pedal is released.

According to a result of real-time monitoring, it is determined that the accelerator pedal in the cockpit is released.

In step S410, the image of the central region in the display is moved upwards, i.e., moved along a historical movement trajectory in a reverse direction, and step S411 is executed.

During a releasing process of the accelerator pedal, the image of the central region is moved along a previous and same movement trajectory, i.e., the historical movement trajectory, in the reverse direction. Since the previous historical movement trajectory is a downward movement trajectory, the image of the central region is moved upwards in this case. By moving the image of the central region along the historical movement trajectory in the reverse direction, actual moving visual effects can be simulated.

In step S411, the method ends.

It should be noted that the above description of first determining whether the vehicle is in the D gear, and then determining whether the vehicle is in the R gear is exemplary only, and the present invention is not limited thereto. Alternatively, whether the vehicle is in the R gear is determined first, and then whether the vehicle is in the D gear is determined.

It can be seen from this embodiment that, according to the solution provided by this embodiment of the present invention, the image of the central region in the display can move with the movement of the accelerator pedal. Moving the image immediately with a change of a control state can effectively alleviate vertigo of the cloud end driver in the related art, thereby reducing or eliminating vertigo of the cloud end driver, enhancing the cloud end driving experience, and improving the safety performance of the remote driving of the vehicle.

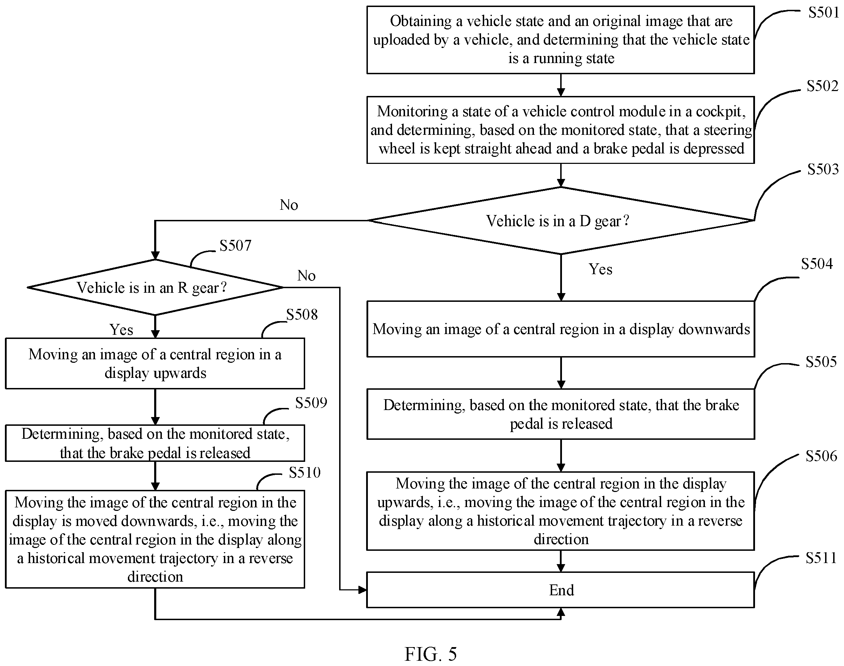

FIG. 5 illustrates a flowchart of a method for processing image display of a remote cockpit according to yet another embodiment of the present invention. In this embodiment, the image of the central region in the display moves with the movement of the brake pedal.

Referring to FIG. 5, the method includes the following steps.

In step S501, a vehicle state and an original image that are uploaded by a vehicle are obtained, and the vehicle state is determined as a running state.

The cockpit can determine, based on current vehicle state data of the vehicle, that the vehicle state is the running state. For example, when the vehicle is in the D gear or the R gear, and the speed is greater than 0, the vehicle is generally in the running state. Description of the step S501 can be referred to the description of the step S401, and details thereof will be omitted here.

In step S502, a state of a vehicle control module in a cockpit is monitored, and it is determined based on the monitored state that a steering wheel is kept straight ahead and a brake pedal is depressed.

Here, states of the steering wheel, the accelerator pedal, and the brake pedal in the cockpit can be monitored in real time through the PC host in the cockpit to obtain operations performed by the steering wheel, the accelerator pedal, and the brake pedal. In this embodiment, it is determined, based on a monitoring result, that the steering wheel in the cockpit is kept straight ahead and the brake pedal in the cockpit is depressed. The real-time monitoring may be periodic monitoring, e.g., monitoring is performed every 10 milliseconds.

In step S503, whether the vehicle is in a D gear is determined; when the vehicle is in the D gear, step S504 is executed; and when the vehicle is in the D gear, step S507 is executed.

In step S504, an image of a central region in a display is moved downwards.

According to the above steps, in response to determining that the controlled vehicle is in the running state, the steering wheel is kept straight ahead, the brake pedal is depressed, and the vehicle is in the D gear, the image of the central region is moved downwards to simulate moving visual effects of braking; when a position of the brake pedal is maintained, the image of the central region stops moving; and when the brake pedal is fully depressed, a lower edge of the image of the central region can coincide with a lower edge of the original image to simulate braking.

In step S505, it is determined based on the monitored state that the brake pedal is released.

According to a result of real-time monitoring, it is determined that the brake pedal in the cockpit is released.

In step S506, the image of the central region in the display is moved upwards, i.e., moved along a historical movement trajectory in a reverse direction, and then step S511 is executed.

During a releasing process of the brake pedal, when the controlled vehicle is still in the running state, the image of the central region is moved along a previous and same movement trajectory, i.e., the historical movement trajectory, in the reverse direction. Since the previous historical movement trajectory is a downward movement trajectory, the image of the central region is moved upwards in this case. When the controlled vehicle has stopped moving, during the releasing process of the brake pedal, the image of the central region no longer moves, i.e., the image of the central region stops moving; and when the brake pedal is completely released, the image of the central region can be directly restored to an initial state.

In step S507, whether the vehicle is in an R gear is determined; when the vehicle is in the R gear, step S508 is executed; and when the vehicle is not in the R gear, step S511 is executed.

In step S508, the image of the central region in a display is moved upwards.

According to the above steps, in response to determining that the controlled vehicle is in the running state, the steering wheel is kept straight ahead, the brake pedal is depressed, and the vehicle is in the R gear, the image of the central region is moved upwards to simulate moving visual effects of backing and braking; when the position of the brake pedal is maintained, the image of the central region stops moving; and when the brake pedal is fully depressed, a lower edge of the image of the central region can coincide with a lower edge of the original image.

In step S509, it is determined based on the monitored state that the brake pedal is released.

According to a result of real-time monitoring, it is determined that the brake pedal in the cockpit is released.

In step S510, the image of the central region in the display is moved downwards, i.e., moved along a historical movement trajectory in a reverse direction, and then step S511 is executed.

During a releasing process of the brake pedal, the image of the central region is moved along a previous and same movement trajectory, i.e., the historical movement trajectory, in the reverse direction. Since the previous historical movement trajectory is an upward movement trajectory, the image of the central region is moved downwards in this case. By moving the image of the central region along the historical movement trajectory in the reverse direction, actual moving visual effects can be simulated.

In step S511, the method ends.

It should be noted that the above description of first determining whether the vehicle is in the D gear and then determining whether the vehicle is in the R gear is exemplary only, and the present invention is not limited thereto. Alternatively, whether the vehicle is in the R gear first is determined first, and then whether the vehicle is in the D gear is determined.

It can be seen from this embodiment that, according to the solution provided by this embodiment of the present invention, the image of the central region in the display can move with the movement of the brake pedal. Moving the image immediately with a change of a control state can effectively alleviate vertigo of the cloud end driver in the related art, thereby reducing or eliminating vertigo of the cloud end driver, enhancing the cloud end driving experience, and improving the safety performance of the remote driving of the vehicle.

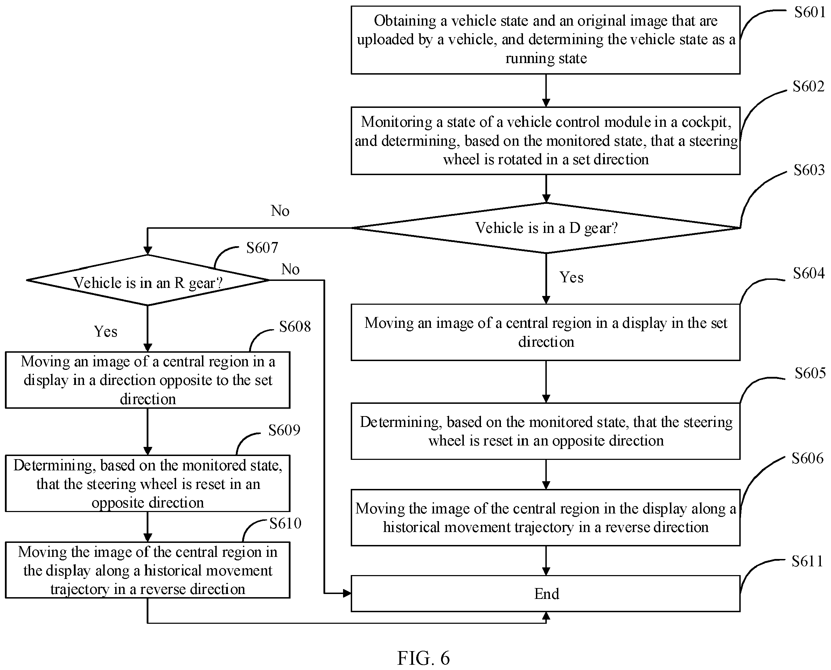

FIG. 6 illustrates a flowchart of a method for processing image display of a remote cockpit according to still yet another embodiment of the present invention. In this embodiment, the image of the central region in the display moves with the movement of the steering wheel.

Referring to FIG. 6, the method includes the following steps.

In step S601, a vehicle state and an original image that are uploaded by a vehicle are obtained, and the vehicle state is determined as a running state.

The cockpit determines, based on current vehicle state data of the vehicle, that the vehicle state is the running state. For example, when the vehicle is in the D gear or the R gear, and the speed is greater than 0, the vehicle is generally in the running state. Description of the step S601 can be referred to description of the step S401, and details thereof will be omitted here.

In step S602, a state of a vehicle control module in a cockpit is monitored, and it is determined based on the monitored state that a steering wheel is rotated in a set direction.

Here, states of the steering wheel, the accelerator pedal, and the brake pedal in the cockpit can be monitored in real time through the PC host in the cockpit to obtain operations performed by the steering wheel, the accelerator pedal, and the brake pedal. In this embodiment, it is determined, based on a monitoring result, that the steering wheel in the cockpit is rotated in the set direction. Real-time monitoring may be periodic monitoring, e.g., monitoring is performed every 10 milliseconds.

In step S603, whether the vehicle is in a D gear is determined; when the vehicle is in the D gear, step S604 is executed; and when the vehicle is not in the D gear, step S607 is executed.

In step S604, an image of a central region in a display is moved in the set direction.

According to the above steps, it is determined that the controlled vehicle is in the running state, the steering wheel is rotated in the set direction, and the vehicle is in the D gear. For example, rotating the steering wheel in the set direction can be rotating the steering wheel to the left (or right). When the steering wheel is rotated to the left (or right), the image of the central region is moved to the left (or right) to simulate moving visual effects of left (right) turning of the vehicle; and when the steering wheel is rotated to the left (or right) by a maximum angle, a left edge (or right edge) of the image of the central region can coincide with a left edge (or right edge) of the original image to better simulate a scenario of turning of the vehicle. When the position of the steering wheel is maintained, the image of the central region stops moving.

In step S605, it is determined based on the monitored state that the steering wheel is reset in an opposite direction.

According to a result of real-time monitoring, it is determined that the steering wheel in the cockpit is reset in the opposite direction.

In step S606, the image of the central region in the display is moved along a historical movement trajectory in a reverse direction, and step S611 is executed.

During a process of resetting the steering wheel in the opposite direction, when the controlled vehicle is still in the running state, the image of the central region is moved along a previous and same movement trajectory, i.e., the historical movement trajectory, in the reverse direction. For example, assuming that the previous historical movement trajectory is a trajectory of movement of the image of the central region to the left (or right), the image of the central region is moved to the right (or left) in this case.

In step S607, whether the vehicle is in an R gear is determined; when the vehicle is in the R gear, step S608 is executed; and when the vehicle is not in the R gear, step S611 is executed.

In step S608, the image of the central region in the display is moved in a direction opposite to the set direction.

According to the above steps, it is determined that the controlled vehicle is in the running state, the steering wheel is rotated in the set direction, and the vehicle is in the R gear. For example, rotating the steering wheel in the set direction can be a process of rotating the steering wheel to the left (or right). During the process of rotating the steering wheel to the left (or right), the image of the central region is moved to the right (or left). When the steering wheel is rotated to the left (or right) by a maximum angle, a right edge (or left edge) of the image of the central region coincides with a right edge (or left edge) of the original image. When the position of the steering wheel is maintained, the image of the central region stops moving.

In step S609, it is determined based on the monitored state that the steering wheel is reset in an opposite direction.

According to a result of real-time monitoring, it is determined that the steering wheel in the cockpit is reset in the opposite direction.

In step S610, the image of the central region in the display is moved along a historical movement trajectory in a reverse direction, and step S611 is executed.

During a process of resetting the steering wheel in the opposite direction, when the controlled vehicle is still in the running state, the image of the central region is moved along a previous and same movement trajectory, i.e., the historical movement trajectory, in the reverse direction. For example, assuming that the previous historical movement trajectory is a trajectory of movement the image of the central region to the right (or left), the image of the central region is moved to the left (or right) in this case.

In step S611, the method ends.

It should be noted that the above description of first determining whether the vehicle is in the D gear and then determining whether the vehicle is in the R gear is exemplary only, and the present invention is not limited thereto. Alternatively, whether the vehicle is in the R gear is determined first, and then whether the vehicle is in the D gear is determined.

It can be seen from this embodiment that, according to the solution provided by this embodiment of the present invention, the image of the central region in the display moves with the movement of the steering wheel. Moving the image image immediately with a change of a control state can effectively alleviate vertigo of the cloud end driver in the related art, thereby reducing or eliminating vertigo of the cloud end driver, enhancing the cloud end driving experience, and improving the safety performance of the remote driving of the vehicle.

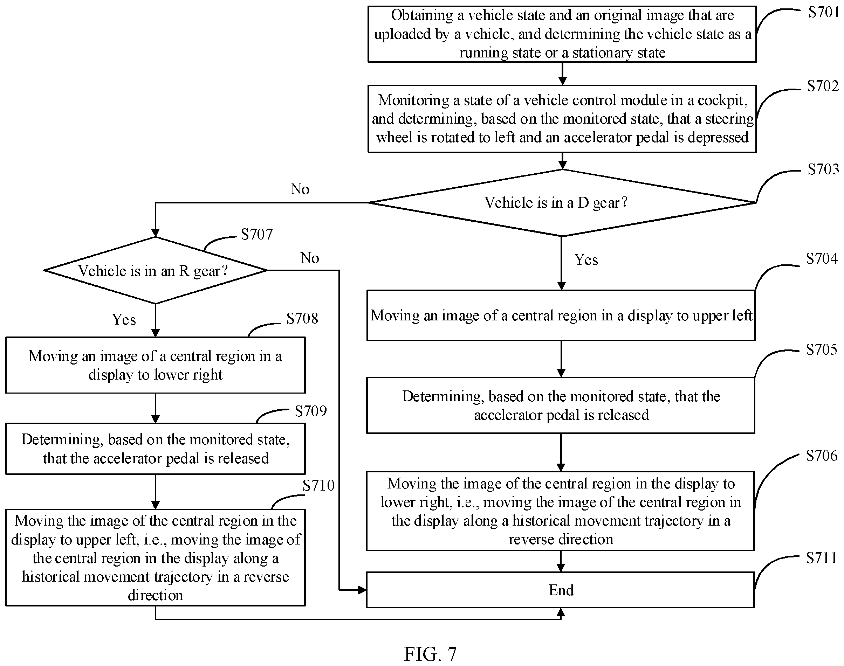

FIG. 7 illustrates a flowchart of a method for processing image display of a remote cockpit according to still yet another embodiment of the present invention. In this embodiment, the image of the central region in the display moves with movements of the steering wheel and the accelerator pedal.

Referring to FIG. 7, the method includes the following steps.

In step S701, a vehicle state and an original image that are uploaded by a vehicle are obtained, and the vehicle state is determined as a running state or a stationary state.

Description of the step S701 can be referred to description of the step S401, and details thereof will be omitted here.

In step S702, a state of a vehicle control module in a cockpit is monitored, and it is determined based on the monitored state that a steering wheel is rotated to left and an accelerator pedal is depressed.

Here, states of the steering wheel, the accelerator pedal, and the brake pedal in the cockpit can be monitored in real time through the PC host in the cockpit to obtain operations performed by the steering wheel, the accelerator pedal, and the brake pedal. In this embodiment, it is determined based on a monitoring result that the steering wheel in the cockpit is rotated to the left and the accelerator pedal in the cockpit is depressed. The real-time monitoring may be periodic monitoring, e.g., monitoring is performed every 10 milliseconds.

It should be noted that this embodiment takes the steering wheel being rotated to the left as an example, and the present invention is not limited to this example. It may alternatively be monitored that the steering wheel is rotated to the right, and a similar principle can be applied to a processing upon rotation of the steering wheel to the right.

In step S703, whether the vehicle is in a D gear is determined; when the vehicle is in the D gear, step S704 is executed; and when the vehicle is not in the D gear, step S707 is executed.

In step S704, an image of a central region in a display is moved to upper left.

According to the above steps, in response to determining that the controlled vehicle is in the stationary state or the running state, the steering wheel is rotated to the left, the accelerator pedal is depressed, and the vehicle is in the D gear, the image of the central region is moved to the upper left to present moving visual effects of turning and acceleration of the vehicle.

Assuming that a length, a width, and a length-to-width ratio of the original image are L, H, and L/H, respectively, where L/H=9/16; and a length, a width, and an length-to-width ratio of the image of the central region outputted to the display are L1, H1, and L1/H1, respectively, where L1/H1=9/16. Lengths and widths of left and right reserved regions outside the image of the central region are both H and (L-L1)/2, respectively. Lengths and widths of upper and lower reserved regions outside the image of the central region are both L and (H-H1)/2, respectively. For example, assuming that a maximum stroke of a accelerator pedal is M, and a maximum left rotation angle of the steering wheel is W, if the accelerator pedal goes from zero to M1 and the steering wheel is rotated to the left by W1, the image of the central region moves upwards by (M1/M)×(H-H1)/2, and simultaneous to this, moves to the left by (W1/W)×(L-L1)/2. That is, the image of the central region is moved to the upper left in this case.

In step S705, it is determined based on the monitored state that the accelerator pedal is released.

According to a result of real-time monitoring, it is determined that the accelerator pedal in the cockpit is released.

In step S706, the image of the central region in the display is moved to lower right, i.e., moved along a historical movement trajectory in a reverse direction, and step S711 is executed.

During a process of releasing the accelerator pedal, the image of the central region is moved along a previous and same movement trajectory, i.e., the historical movement trajectory, in the reverse direction. Since the previous historical movement trajectory is a trajectory of movement of the image of the central region to the upper left, the image of the central region is moved to the lower right in this case.

In step S707, whether the vehicle is in an R gear is determined; when the vehicle is in the R gear, step S708 is executed; and when the vehicle is not in the R gear, step S711 is executed.

In step S708, the image of the central region in the display is moved to lower right.

A movement principle of the image of the central region in the step S708 is the same as that described in step S704, except that a direction in this case is a lower right direction. The content of the movement principle can be referred to the description of the step S704, and details thereof will be omitted here.

In step S709, it is determined based on the monitored state that the accelerator pedal is released.

According to a result of real-time monitoring, it is determined that the accelerator pedal in the cockpit is released.

In step S710, the image of the central region in the display is moved to upper left, i.e., moved along a historical movement trajectory in a reverse direction, and step S711 is executed.

During a process of releasing the accelerator pedal, the image of the central region is moved along a previous and same movement trajectory, i.e., the historical movement trajectory, in the reverse direction. Since the previous historical movement trajectory is a trajectory of movement of the image of the central region to the lower right, the image of the central region is moved to the upper left in this case.

In step S711, the method ends.

It should be noted that the above description of first determining whether the vehicle is in the D gear and then determining whether the vehicle is in the R gear is exemplary only, and the present invention is not limited thereto. Alternatively, whether the vehicle is in the R gear is determined first, and then whether the vehicle is in the D gear is determined. In addition, the above description takes the steering wheel being rotated to the left as an example, and the present invention is not limited to this example. When the steering wheel is rotated to the right, a similar movement principle is applied to the image of the central region.

It can be seen from this embodiment that, according to the solution provided by this embodiment of the present invention, the image of the central region in the display moves with movements of the steering wheel and the accelerator pedal. Moving the image immediately with a change of a control state can effectively alleviate vertigo of the cloud end driver in the related art, thereby reducing or eliminating vertigo of the cloud end driver, enhancing the cloud end driving experience, and improving the safety performance of the remote driving of the vehicle.

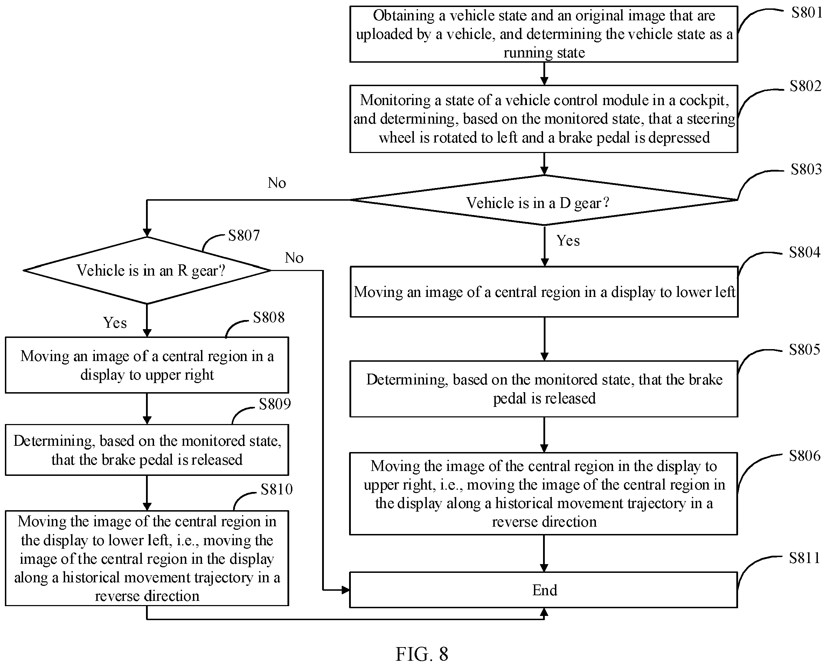

FIG. 8 illustrates a flowchart of a method for processing image display of a remote cockpit according to still yet another embodiment of the present invention. In this embodiment, the image of the central region in the display moves with movements of the steering wheel and the brake pedal.

Referring to FIG. 8, the method includes the following steps.

In step S801, a vehicle state and an original image that are uploaded by a vehicle are obtained, and the vehicle state is determined as a running state.

Description of the step S801 can be referred to description of the step S501, and details thereof will be omitted here.

In step S802, a state of a vehicle control module in a cockpit is monitored, and it is determined based on the monitored state that a steering wheel is rotated to left and a brake pedal is depressed.

Here, states of the steering wheel, the accelerator pedal, and the brake pedal of the cockpit can be monitored in real time through the PC host in the cockpit to obtain operations performed by the steering wheel, the accelerator pedal, and the brake pedal. In this embodiment, according to a monitoring result, it is determined that the steering wheel in the cockpit is rotated to the left and the brake pedal in the cockpit is depressed. The real-time monitoring may be periodic monitoring, e.g., monitoring is performed every 10 milliseconds.

It should be noted that this embodiment takes the steering wheel being rotated to the left as an example, and the present invention is not limited thereto. It may alternatively be detected that the steering wheel is rotated to the right, and a similar principle can be applied to a processing upon rotation of the steering wheel to the right.

In step S803, whether the vehicle is in a D gear is determined; when the vehicle is in the D gear, step S804 is executed; and when the vehicle is not in the D gear, step S807 is executed.

In step S804, an image of a central region in a display is moved to lower left.

According to the above steps, in response to determining that the controlled vehicle is in the running state, the steering wheel is rotated to the left, the brake pedal is depressed, and the vehicle is in the D gear, the image of the central region is moved to the lower left to present moving visual effects of turning and deceleration of the vehicle.

Assuming that a length, a width, and a length-to-width ratio of the original image are L, H, and L/H, respectively, where L/H=9/16; and a length, a width, and a length-to-width ratio of the image of the central region outputted to the display are L1, H1, and L1/H1, respectively, where L1/H1=9/16. Lengths and widths of left and right reserved regions outside the image of the central region are both H and (L-L1)/2, respectively. Lengths and widths of upper and lower reserved regions outside the image of the central region are both L and (H-H1)/2, respectively. For example, assuming that a maximum stroke of the brake pedal is P, and a maximum left rotation angle of the steering wheel is W, if the brake pedal goes from zero to P1 and the steering wheel is rotated to the left by W1, the image of the central region moves downwards by (P1/P)×(H-H1)/2, and moves to the left by (W1/W)×(L-L1)/2. That is, the image of the central region is moved to the lower left in this case.

In step S805, it is determined based on the monitored state that the brake pedal is released.

According to a result of real-time monitoring, it is determined that the accelerator pedal in the cockpit is released.

In step S806, the image of the central region in the display is moved to upper right, i.e., moved along a historical movement trajectory in a reverse direction, and step S811 is executed.

During a process of releasing the brake pedal, the image of the central region is moved along a previous and same movement trajectory, i.e., the historical movement trajectory, in the reverse direction. Since the previous historical movement trajectory is a trajectory of movement of the image of the central region to the lower left, the image of the central region is moved to the upper right in this case.

In step S807, whether the vehicle is in an R gear is determined; when the vehicle is in the R gear, step S808 is executed; and when the vehicle is not in the R gear, step S811 is executed.

In step S808, the image of the central region in the display is moved to upper right.

A movement principle of the image of the central region in the step S808 is the same as that described in the step S804, except that a direction in this case is an upper right direction. The content of the movement principle can be referred to the description of the step S804, and details thereof will be omitted here.

In step S809, it is determined based on the monitored state that the brake pedal is released.

According to a result of real-time monitoring, it is determined that the accelerator pedal in the cockpit is released.

In step S810, the image of the central region in the display is moved to lower left, i.e., moved along a historical movement trajectory in a reverse direction, and step S811 is executed.

During a process of releasing the brake pedal, the image of the central region is moved along a previous and same movement trajectory, i.e., the historical movement trajectory, in the reverse direction. Since the previous historical movement trajectory is a trajectory of movement of the image of the central region to the upper right, the image of the central region is moved to the lower left in this case.

In step S811, the method ends.

It should be noted that the above description of first determining whether the vehicle is in the D gear, and then determining whether the vehicle is in the R gear is exemplary only, and the present invention is not limited thereto. Also, whether the vehicle is in the R gear is determined first, and then whether the vehicle is in the D gear is determined. In addition, the above description takes the steering wheel being rotated to the left as an example, and the present invention is not limited to this example. When the steering wheel is rotated to the right, a similar movement principle is applied to the image of the central region.

It can be seen from this embodiment that, according to the solution provided by this embodiment of the present invention, the image of the central region of the display moves with movements of the steering wheel and the brake pedal. Moving the image immediately with a change of a control state can effectively alleviate vertigo of the cloud end driver in the related art, thereby reducing or eliminating vertigo of the cloud end driver, enhancing the cloud end driving experience, and improving the safety performance of the remote driving of the vehicle.

It can be found from the embodiments in FIGS. 7 and 8 that in the running state, when the steering wheel and the accelerator pedal are moved simultaneously or the steering wheel and the brake pedal are moved simultaneously, a movement of the image of the central region is a sum of vectors of movement amounts of the steering wheel and the accelerator pedal or a sum of vectors of movement amounts of the steering wheel and the brake pedal under the above-mentioned rules. For example, in the running state, when the steering wheel and the accelerator pedal of the vehicle are moved simultaneously, a movement amount of the display image is a sum of a vector of a movement amount of the steering wheel and a vector of a movement amount of the accelerator pedal; and in the running state, when the steering wheel and the brake pedal of the vehicle are moved simultaneously, a movement amount of the display image is a sum of a vector of a movement amount of the steering wheel and a vector of a movement amount of the brake pedal. For example, when the vehicle is in the D gear, the steering wheel is rotated to the left and the accelerator pedal is depressed, the image of the central region is moved to the upper left; and a result of any other combination of states can be deduced by analogy.

Generally speaking, a movement duration of the display image, i.e., the image of the central region, is equal to a state change duration of the steering wheel, the accelerator pedal, or the brake pedal. In addition, the above embodiments are only examples of moving the image of the central region in various directions, and the present invention is not limited thereto. When in movement, the display image, i.e., the image of the central region, can also be distorted, rotated, or scaled, which gives the cloud end driver an illusion of an immediate control response, thereby further alleviating the vertigo of the driver. Also, in addition to directions of movement, speeds of movement can also be changed accordingly.

The above describes in detail the method for processing the image display of the remote cockpit according to the embodiments of the present invention. Accordingly, the embodiments of the present invention also provide an apparatus for processing image display of a remote cockpit, a cockpit, a remote driving system, and related devices correspondingly.

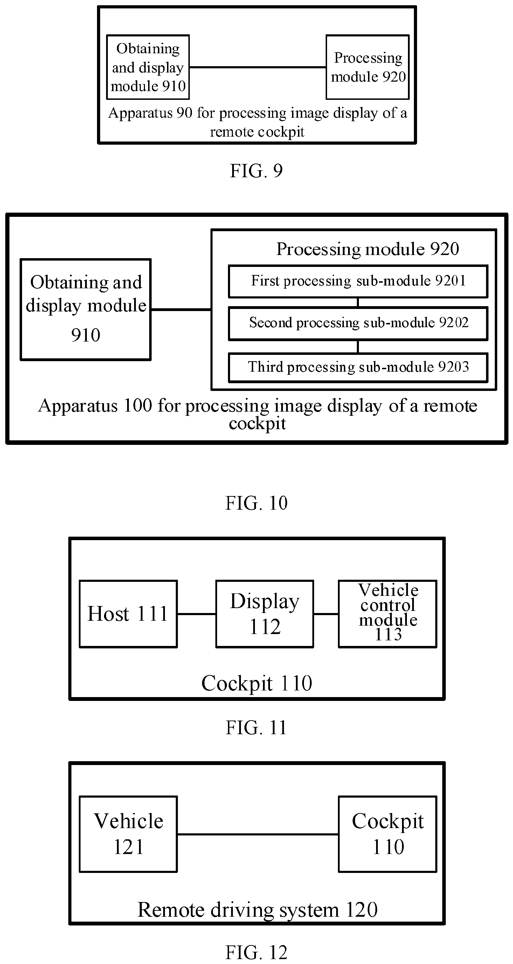

FIG. 9 is a schematic diagram showing a structure of an apparatus for processing image display of a remote cockpit according to an embodiment of the present invention.

Referring to FIG. 9, an apparatus 90 for processing image display of a remote cockpit can be configured to perform the method for processing the image display of the remote cockpit according to any of the above embodiments of the present invention.

The apparatus 90 for processing the image display of the remote cockpit includes an obtaining and display module 910 and a processing module 920.

The obtaining and display module 910 is configured to obtain a vehicle state and an original image uploaded by a vehicle, process the original image, and display the processed original image as a display image in a display of the cockpit. The obtaining and display module 910 can be configured to display an image of a specific region of the original image as the display image in the display of the cockpit. The image of the specific region can be, for example, the image of the central region, and the present invention is not limited thereto.

The processing module 920 is configured to perform different movement processings on the display image in the display based on the vehicle state obtained by the obtaining and display module 910 and monitored different states of a vehicle control module in the cockpit.

Here, the vehicle control module may include but is not limited to a steering wheel, an accelerator pedal, a brake pedal, etc.. A movement duration of the display image is equal to a state change duration of the steering wheel, the accelerator pedal, or the brake pedal. In addition, when the controlled vehicle is in a stationary state, any rotation of the steering wheel and depression of the brake pedal generally do not cause a movement of the image of the central region. If states of the steering wheel, the accelerator pedal, and the brake pedal do not change, the image of the central region does not move, either.

It can be seen from this embodiment that, with the apparatus for processing the image display of the remote cockpit provided by this embodiment of the present invention, different movement processings can be performed on the display image in the display based on the vehicle state and the monitored different states of the vehicle control module in the cockpit. In this way, an image in the display moves immediately with a state change of the vehicle control module such as the steering wheel, the accelerator pedal, and the brake pedal. Moving the image immediately with a change of a control state can effectively alleviate vertigo of the cloud end driver in the related art, thereby reducing or eliminating vertigo of the cloud end driver, enhancing the cloud end driving experience, and improving the safety performance of the remote driving of the vehicle.

FIG. 10 is a schematic diagram showing a structure of an apparatus for processing image display of a remote cockpit according to another embodiment of the present invention.

Referring to FIG. 10, this embodiment illustrates the structure of the apparatus for processing the image display of the remote cockpit in more detail by comparing with FIG. 9. An apparatus 100 for processing image display of the remote cockpit includes an obtaining and display module 910 and a processing module 920. Functions of the obtaining and display module 910 and the processing module 920 may be referred to description in FIG. 9. The vehicle control module includes a steering wheel, an accelerator pedal, and a brake pedal.

The processing module 920 may include a first processing sub-module 9201, a second processing sub-module 9202, or a third processing sub-module 9203.

The first processing sub-module 9201 is configured to, in a running state or a stationary state of the vehicle, in response to monitoring that the steering wheel in the cockpit is kept straight ahead and the accelerator pedal in the cockpit is depressed, move the display image upwards when the vehicle is in a D gear, and move the display image downwards when the vehicle is in an R gear. Further, after the accelerator pedal is depressed, the display image stops moving when a position of the accelerator pedal is maintained, and the display image is moved along a historical movement trajectory in a reverse direction when the accelerator pedal is released. When the accelerator pedal is fully depressed, an upper edge of the display image coincides with an upper edge of the original image when the vehicle is in the D gear, and a lower edge of the display image coincides with a lower edge of the original image when the vehicle is in the R gear.

The second processing sub-module 9202 is configured to, in the running state of the vehicle, in response to monitoring that the steering wheel in the cockpit is kept straight ahead and the brake pedal in the cockpit is depressed, move the display image downwards when the vehicle is in the D gear, and move the display image upwards when the vehicle is in the R gear. Further, after the brake pedal is depressed, the display image stops moving when a position of the brake pedal is maintained, the display image is moved along a historical movement trajectory in a reverse direction when the brake pedal is released and the vehicle is still in the running state, the display image stops moving when the vehicle has entered a stop state, and the display image is directly restored to an initial state when the brake pedal is completely released. When the brake pedal is fully depressed, the lower edge of the display image coincides with the lower edge of the original image when the vehicle is in the D gear, and the upper edge of the display image coincides with the upper edge of the original image when the vehicle is in the R gear.

The third processing sub-module 9203 is configured to, in the running state of the vehicle, move, when the vehicle is in the D gear and in response to monitoring that the steering wheel in the cockpit is rotated in a set direction, the display image in the set direction, and move, when the vehicle is in the R gear and in response to monitoring that the steering wheel in the cockpit is rotated in the set direction, the display image in a direction opposite to the set direction. Further, after the steering wheel is rotated in the set direction, the display image stops moving when a position of the steering wheel is maintained, and the display image is moved along a historical movement trajectory in a reverse direction when the steering wheel is reset in an opposite direction. When the steering wheel is rotated in the set direction by a maximum angle, an edge of the display image in the set direction coincides with an edge of the original image in the set direction when the vehicle is in the D gear, and the edge of the display image in the set direction coincides with an edge of the original image in a direction opposite to the set direction when the vehicle is in the R gear.

It should also be noted that in the running state of the vehicle, when the steering wheel and the accelerator pedal move simultaneously, a movement amount of the display image is a sum of a vector of a movement amount of the steering wheel and a vector of a movement amount of the accelerator pedal; or in the running state of the vehicle, when the steering wheel and the brake pedal move simultaneously, a movement amount of the display image is a sum of a vector of a movement amount of the steering wheel and a vector of a movement amount of the brake pedal.

FIG. 11 is a schematic diagram showing a structure of a cockpit according to an embodiment of the present invention. The cockpit can be a cloud end cockpit.

Referring to FIG. 11, this embodiment provides a cockpit 110. The cockpit 110 includes a host 111, a display 112, and a vehicle control module 113. The vehicle control module 113 may include a steering wheel, an accelerator pedal, and a brake pedal.

Here, the host 111 is configured to obtain a vehicle state and an original image that are uploaded by a vehicle, process the original image, and display the processed original image as a display image in a display 112 of the cockpit; and perform different movement processings on the display image in the display 112 based on the vehicle state and monitored different states of the vehicle control module 113 in the cockpit.

The display 112 is configured to display the display image.

The host 111 is configured to, in a running state or a stationary state of the vehicle, in response to monitoring that the steering wheel in the cockpit is kept straight ahead and the accelerator pedal in the cockpit is depressed, move the display image upwards when the vehicle is in a D gear, and move the display image downwards when the vehicle is in an R gear; or in the running state of the vehicle, in response to monitoring that the steering wheel in the cockpit is kept straight ahead and the brake pedal in the cockpit is depressed, move the display image downwards when the vehicle is in the D gear, and move the display image upwards when the vehicle is in the R gear; or in the running state of the vehicle, move, when the vehicle is in the D gear and in response to monitoring that the steering wheel in the cockpit is rotated in a set direction, the display image in the set direction, and move, when the vehicle is in the R gear and in response to monitoring that the steering wheel in the cockpit is rotated in the set direction, the display image in a direction opposite to the set direction.

For specific description of functions of the host 111, reference may be made to the description of the apparatus for processing the image display of the remote cockpit in FIG. 10, and details thereof will be omitted here.

FIG. 12 is a schematic diagram showing a structure of a remote driving system according to an embodiment of the present invention.

Referring to FIG. 12, this embodiment provides a remote driving system 120. The remote driving system 120 includes a vehicle 121 and the cockpit 110 as described in the above embodiment. A structure and functions of the cockpit 110 can be referred to the description in FIG. 11.

In this embodiment, a wireless connection can be established between the vehicle 121 and the cockpit 110 based on the 5G communication network. The vehicle 121 uploads various in-vehicle sensor data and current vehicle state data to the cockpit 110 via the 5G communication network. Here, the in-vehicle sensor data may include data from a camera, an ultrasound radar, a millimeter wave radar, a laser radar, etc.; and the current vehicle state data may include data such as a gear position, a speed, and a rotation angle of the steering wheel. Here, the host of the cockpit 110 processes the original image and outputs the central region of the original image to the display. The host of the cockpit 110 monitors states of the steering wheel, the accelerator pedal, and the brake pedal in real time, and controls the central region to move accordingly with movements of the steering wheel, the accelerator pedal, the brake pedal, and the like. The host of the cockpit 110 collects movements and state data of the steering wheel, the accelerator pedal, the brake pedal, and the like simultaneously, and issues a corresponding remote control instruction to the controlled vehicle 121, thereby realizing remote control of the vehicle 121.

Regarding the apparatus according to any of the above embodiments, a specific manner in which each module performs operations has been described in detail in the embodiments of the method, and detailed description will be omitted here.

Those skilled in the art can also understand that various exemplary logic blocks, modules, circuits, and algorithm steps described in combination with the present invention can be implemented as electronic hardware, computer software, or a combination thereof.

The flowcharts and block diagrams in the figures illustrate system frameworks, functions, and operations of possible implementations of systems and methods according to various embodiments of the present invention. In this regard, each block in the flowcharts or block diagrams may represent a module, a program segment, or a part of codes. The module, program segment, or part of codes may contain one or more executable instructions for implementing a specified logical function. It is also to be noted that, in some alternative implementations, functions showed in blocks may occur in a different order from the order shown in the figures. For example, two blocks illustrated in succession may actually be executed substantially in parallel with each other, or sometimes even in a reverse order, depending on functions involved. It is also to be noted that each block in the block diagrams and/or flowcharts, or any combination of the blocks in the block diagrams and/or flowcharts, may be implemented using a dedicated hardware-based system that is configured to perform specified functions or operations or using a combination of dedicated hardware and computer instructions.

In addition, the method provided by the present invention can also be implemented as a computer program or a computer program product. The computer program or the computer program product includes computer program code instructions for executing part or all of the steps in the above method of the present invention.

Alternatively, the present invention can also be implemented as a non-transitory machine-readable storage medium (or a computer-readable storage medium, or a machine-readable storage medium) having executable codes (or a computer program, or computer instruction codes) stored thereon. The executable codes (or the computer program, or the computer instruction codes), when executed by a processor of an electronic device (or an electronic apparatus, a server, etc.), cause the processor to execute part or all of the steps of the above method provided by the present invention.

## Claims

1. A method for processing image display of a remote cockpit, comprising:
obtaining a vehicle state and an original image uploaded by a vehicle, processing the original image, and displaying the processed original image as a display image in a display of the remote cockpit; and
the method is **characterised by** performing different movement processings on the display image in the display of the remote cockpit based on the vehicle state and monitored different states of a vehicle control module in the remote cockpit.

2. The method according to claim 1, wherein the vehicle control module comprises a steering wheel, an accelerator pedal, and a brake pedal.

3. The method according to claim 2, wherein said processing the original image, and displaying the processed original image as the display image in the display of the remote cockpit comprises:
displaying an image of a specific region of the original image as the display image in the display of the remote cockpit.

4. The method according to claim 3, wherein said performing the different movement processings on the display image in the display of the remote cockpit based on the vehicle state and the monitored different states of the vehicle control module in the remote cockpit comprises:
in a running state or a stationary state of the vehicle, in response to monitoring that the steering wheel in the remote cockpit is kept straight ahead and the accelerator pedal in the remote cockpit is depressed, moving the display image upwards when the vehicle is in a D gear, and moving the display image downwards when the vehicle is in an R gear; or
in the running state of the vehicle, in response to monitoring that the steering wheel in the remote cockpit is kept straight ahead and the brake pedal in the remote cockpit is depressed, moving the display image downwards when the vehicle is in the D gear, and moving the display image upwards when the vehicle is in the R gear; or
in the running state of the vehicle, moving, when the vehicle is in the D gear and in response to monitoring that the steering wheel in the remote cockpit is rotated in a set direction, the display image in the set direction, and moving, when the vehicle is in the R gear and in response to monitoring that the steering wheel in the remote cockpit is rotated in the set direction, the display image in a direction opposite to the set direction.

5. The method according to claim 4, further comprising:
after the accelerator pedal is depressed, stopping moving the display image when a position of the accelerator pedal is maintained, and moving the display image along a historical movement trajectory in a reverse direction when the accelerator pedal is released; or
after the brake pedal is depressed, stopping moving the display image when a position of the brake pedal is maintained, moving the display image along a historical movement trajectory in a reverse direction when the brake pedal is released and the vehicle is still in the running state, stopping moving the display image when the vehicle has entered a stop state, and directly restoring the display image to an initial state when the brake pedal is completely released; or
after the steering wheel is rotated in the set direction, stopping moving the display image when a position of the steering wheel is maintained, and moving the display image along a historical movement trajectory in a reverse direction when the steering wheel is reset in an opposite direction.

6. The method according to claim 4, wherein
when the accelerator pedal is fully depressed, an upper edge of the display image coincides with an upper edge of the original image when the vehicle is in the D gear, and a lower edge of the display image coincides with a lower edge of the original image when the vehicle is in the R gear; or
when the brake pedal is fully depressed, the lower edge of the display image coincides with the lower edge of the original image when the vehicle is in the D gear, and the upper edge of the display image coincides with the upper edge of the original image when the vehicle is in the R gear; or
when the steering wheel is rotated in the set direction by a maximum angle, an edge of the display image in the set direction coincides with an edge of the original image in the set direction when the vehicle is in the D gear, and the edge of the display image in the set direction coincides with an edge of the original image in a direction opposite to the set direction when the vehicle is in the R gear.

7. The method according to any one of claims 4 to 6, wherein
in the running state of the vehicle, when the steering wheel and the accelerator pedal move simultaneously, a movement amount of the display image is a sum of a vector of a movement amount of the steering wheel and a vector of a movement amount of the accelerator pedal; or
in the running state of the vehicle, when the steering wheel and the brake pedal move simultaneously, a movement amount of the display image is a sum of a vector of a movement amount of the steering wheel and a vector of a movement amount of the brake pedal.

8. The method according to any one of claims 3 to 6, wherein a movement duration of the display image is equal to a state change duration of the steering wheel, the accelerator pedal, or the brake pedal.

9. The method according to any one of claims 3 to 6, further comprising:
distorting, rotating, or scaling the display image when the display image is in movement.

10. An apparatus (90,100) for processing image display of a remote cockpit, comprising:
an obtaining and display module (910) configured to obtain a vehicle state and an original image uploaded by a vehicle, process the original image, and display the processed original image as a display image in a display of the remote cockpit; and
the apparatus is **characterised by** a processing module (920) configured to perform different movement processings on the display image in the display of the remote cockpit based on the vehicle state obtained by the obtaining and display module (910) and monitored different states of a vehicle control module in the remote cockpit.

11. The apparatus according to claim 10, wherein the vehicle control module comprises a steering wheel, an accelerator pedal, and a brake pedal, and the processing module (920) comprises:
a first processing sub-module (9201) configured to, in a running state or a stationary state of the vehicle, in response to monitoring that the steering wheel in the remote cockpit is kept straight ahead and the accelerator pedal in the remote cockpit is depressed, move the display image upwards when the vehicle is in a D gear, and move the display image downwards when the vehicle is in an R gear; or
a second processing sub-module (9202) configured to, in the running state of the vehicle, in response to monitoring that the steering wheel in the remote cockpit is kept straight ahead and the brake pedal in the remote cockpit is depressed, move the display image downwards when the vehicle is in the D gear, and move the display image upwards when the vehicle is in the R gear; or
a third processing sub-module (9203) configured to, in the running state of the vehicle, move, when the vehicle is in the D gear and in response to monitoring that the steering wheel in the remote cockpit is rotated in a set direction, the display image in the set direction, and move, when the vehicle is in the R gear and in response to monitoring that the steering wheel in the remote cockpit is rotated in the set direction, the display image in a direction opposite to the set direction.

12. A cockpit (110), comprising:
a host (111);
a display (112); and
a vehicle control module (113),
wherein the host (111) is configured to: obtain a vehicle state and an original image uploaded by a vehicle, process the original image, and display the processed original image as a display image in the display (112) of the cockpit (110); and perform different movement processings on the display image in the display (112) based on the vehicle state and monitored different states of the vehicle control module (113) in the cockpit (110); and
the display (112) is configured to display the display image.

13. The cockpit (110) according to claim 12, wherein the vehicle control module (113) comprises a steering wheel, an accelerator pedal, and a brake pedal; and
the host (111) is configured to, in a running state or a stationary state of the vehicle, in response to monitoring that the steering wheel in the cockpit (110) is kept straight ahead and the accelerator pedal in the cockpit (110) is depressed, move the display image upwards when the vehicle is in a D gear, and move the display image downwards when the vehicle is in an R gear; or in the running state of the vehicle, in response to monitoring that the steering wheel in the cockpit (110) is kept straight ahead and the brake pedal in the cockpit (110) is depressed, move the display image downwards when the vehicle is in the D gear, and move the display image upwards when the vehicle is in the R gear; or in the running state of the vehicle, move, when the vehicle is in the D gear and in response to monitoring that the steering wheel in the cockpit (110) is rotated in a set direction, the display image in the set direction, and move, when the vehicle is in the R gear and in response to monitoring that the steering wheel in the cockpit (110) is rotated in the set direction, the display image in a direction opposite to the set direction.

14. A remote driving system (120), comprising a vehicle (121) and the cockpit (110) according to claim 12 or 13.

15. A non-transitory machine-readable storage medium having executable codes stored thereon, wherein the executable codes, when executed by a processor of an electronic device, cause the processor to perform the method according to any one of claims 1 to 9.

## Patentansprüche

1. Verfahren zum Verarbeiten der Bildanzeige eines entfernten Cockpits, das Folgendes beinhaltet:
Erfassen eines Fahrzeugzustands und eines von einem Fahrzeug hochgeladenen Originalbildes, Verarbeiten des Originalbildes und Anzeigen des verarbeiteten Originalbildes als ein Anzeigebild auf einem Display des entfernten Cockpits; und
wobei das Verfahren **gekennzeichnet ist durch** Durchführen verschiedener Bewegungsverarbeitungen an dem Anzeigebild auf dem Display des entfernten Cockpits auf der Basis des Fahrzeugzustands und überwachter verschiedener Zustände eines Fahrzeugsteuermoduls in dem entfernten Cockpit.

2. Verfahren nach Anspruch 1, wobei das Fahrzeugsteuermodul ein Lenkrad, ein Gaspedal und ein Bremspedal umfasst.

3. Verfahren nach Anspruch 2, wobei das genannte Verarbeiten des Originalbildes und das Anzeigen des verarbeiteten Originalbildes als das Anzeigebild auf dem Display des entfernten Cockpits Folgendes beinhaltet:
Anzeigen eines Bildes einer bestimmten Region des Originalbildes als das Anzeigebild auf dem Display des entfernten Cockpits.

4. Verfahren nach Anspruch 3, wobei das genannte Durchführen der verschiedenen Bewegungsverarbeitungen an dem Anzeigebild auf dem Display des entfernten Cockpits auf der Basis des Fahrzeugzustands und der überwachten verschiedenen Zustände des Fahrzeugsteuermoduls in dem entfernten Cockpit Folgendes beinhaltet:
in einem fahrenden Zustand oder einem stationären Zustand des Fahrzeugs, als Reaktion auf die Überwachung, dass das Lenkrad in dem entfernten Cockpit geradeaus gehalten und das Gaspedal in dem entfernten Cockpit niedergedrückt wird, Bewegen des Anzeigebildes nach oben, wenn das Fahrzeug in einem D-Gang ist, und Bewegen des Anzeigebildes nach unten, wenn das Fahrzeug in einem R-Gang ist; oder
im fahrenden Zustand des Fahrzeugs, als Reaktion auf die Überwachung, dass das Lenkrad im entfernten Cockpit geradeaus gehalten und das Bremspedal im entfernten Cockpit niedergedrückt wird, Bewegen des Anzeigebildes nach unten, wenn das Fahrzeug im D-Gang ist, und Bewegen des Anzeigebildes nach oben, wenn das Fahrzeug im R-Gang ist; oder
im fahrenden Zustand des Fahrzeugs, Bewegen, wenn das Fahrzeug im D-Gang ist und als Reaktion auf die Überwachung, dass das Lenkrad im entfernten Cockpit in eine bestimmte Richtung gedreht wird, des Anzeigebildes in die bestimmte Richtung, und Bewegen, wenn das Fahrzeug im R-Gang ist und als Reaktion auf die Überwachung, dass das Lenkrad im entfernten Cockpit in die bestimmte Richtung gedreht wird, des Anzeigebildes in eine Richtung entgegengesetzt zu der bestimmten Richtung.

5. Verfahren nach Anspruch 4, das ferner Folgendes beinhaltet:
Stoppen, nach dem Niederdrücken des Gaspedals, der Bewegung des Anzeigebildes, wenn eine Position des Gaspedals beibehalten wird, und Bewegen des Anzeigebildes entlang einer historischen Bewegungsbahn in einer umgekehrten Richtung, wenn das Gaspedal losgelassen wird; oder
Stoppen, nach dem Niederdrücken des Bremspedals, der Bewegung des Anzeigebildes, wenn eine Position des Bremspedals beibehalten wird, Bewegen des Anzeigebildes entlang einer historischen Bewegungsbahn in einer umgekehrten Richtung, wenn das Bremspedal losgelassen wird und das Fahrzeug immer noch im fahrenden Zustand ist, Stoppen der Bewegung des Anzeigebildes, wenn das Fahrzeug in einen Stoppzustand eingetreten ist, und direktes Wiederherstellen des Anzeigebildes in einen Ausgangszustand, wenn das Bremspedal vollständig losgelassen wird; oder
nach dem Drehen des Lenkrads in die bestimmte Richtung, Stoppen der Bewegung des Anzeigebildes, wenn eine Position des Lenkrads beibehalten wird, und Bewegen des Anzeigebildes entlang einer historischen Bewegungsbahn in einer umgekehrten Richtung, wenn das Lenkrad in eine entgegengesetzte Richtung zurückgebracht wird.

6. Verfahren nach Anspruch 4, wobei
wenn das Gaspedal vollständig niedergedrückt wird, ein oberer Rand des Anzeigebildes mit einem oberen Rand des Originalbildes übereinstimmt, wenn das Fahrzeug im D-Gang ist, und ein unterer Rand des Anzeigebildes mit einem unteren Rand des Originalbildes übereinstimmt, wenn das Fahrzeug im R-Gang ist; oder
wenn das Bremspedal vollständig niedergedrückt wird, der untere Rand des Anzeigebildes mit dem unteren Rand des Originalbildes übereinstimmt, wenn das Fahrzeug im D-Gang ist, und der obere Rand des Anzeigebildes mit dem oberen Rand des Originalbildes übereinstimmt, wenn das Fahrzeug im R-Gang ist; oder
wenn das Lenkrad in die bestimmte Richtung um einen maximalen Winkel gedreht wird, ein Rand des Anzeigebildes in der bestimmten Richtung mit einem Rand des Originalbildes in der bestimmten Richtung übereinstimmt, wenn das Fahrzeug im D-Gang ist, und der Rand des Anzeigebildes in der bestimmten Richtung mit einem Rand des Originalbildes in einer Richtung entgegengesetzt zu der bestimmten Richtung übereinstimmt, wenn das Fahrzeug im R-Gang ist.

7. Verfahren nach einem der Ansprüche 4 bis 6, wobei
im fahrenden Zustand des Fahrzeugs, wenn sich das Lenkrad und das Gaspedal gleichzeitig bewegen, ein Bewegungsbetrag des Anzeigebildes eine Summe eines Vektors eines Bewegungsbetrags des Lenkrads und eines Vektors eines Bewegungsbetrags des Gaspedals ist; oder
im fahrenden Zustand des Fahrzeugs, wenn sich das Lenkrad und das Bremspedal gleichzeitig bewegen, ein Bewegungsbetrag des Anzeigebildes eine Summe eines Vektors eines Bewegungsbetrags des Lenkrads und eines Vektors eines Bewegungsbetrags des Bremspedals ist.

8. Verfahren nach einem der Ansprüche 3 bis 6, wobei eine Bewegungsdauer des Anzeigebildes gleich einer Zustandsänderungsdauer des Lenkrads, des Gaspedals oder des Bremspedals ist.

9. Verfahren nach einem der Ansprüche 3 bis 6, das ferner Folgendes beinhaltet:
Verzerren, Drehen oder Skalieren des Anzeigebildes, wenn das Anzeigebild in Bewegung ist.

10. Vorrichtung (90, 100) zur Verarbeitung der Bildanzeige eines entfernten Cockpits, die Folgendes umfasst:
ein Erfassungs- und Anzeigemodul (910), konfiguriert zum Erfassen eines Fahrzeugzustands und eines von einem Fahrzeug hochgeladenen Originalbildes, Verarbeiten des Originalbildes und Anzeigen des verarbeiteten Originalbildes als ein Anzeigebild auf einem Display des entfernten Cockpits; und
wobei die Vorrichtung **gekennzeichnet ist durch**
ein Verarbeitungsmodul (920), konfiguriert zum Durchführen verschiedener Bewegungsverarbeitungen an dem Anzeigebild auf dem Display des entfernten Cockpits auf der Basis des durch das Erfassungs- und Anzeigemodul (910) erfassten Fahrzeugzustands und überwachter verschiedener Zustände eines Fahrzeugsteuermoduls in dem entfernten Cockpit.

11. Vorrichtung nach Anspruch 10, wobei das Fahrzeugsteuermodul ein Lenkrad, ein Gaspedal und ein Bremspedal umfasst, und das Verarbeitungsmodul (920) Folgendes umfasst:
ein erstes Verarbeitungssubmodul (9201), konfiguriert zum Bewegen, in einem fahrenden Zustand oder einem stationären Zustand des Fahrzeugs, als Reaktion auf die Überwachung, dass das Lenkrad in dem entfernten Cockpit geradeaus gehalten und das Gaspedal in dem entfernten Cockpit niedergedrückt wird, des Anzeigebildes nach oben, wenn das Fahrzeug in einem D-Gang ist, und des Anzeigebildes nach unten, wenn das Fahrzeug in einem R-Gang ist; oder
ein zweites Verarbeitungssubmodul (9202), konfiguriert zum Bewegen, im fahrenden Zustand des Fahrzeugs, als Reaktion auf die Überwachung, dass das Lenkrad in dem entfernten Cockpit geradeaus gehalten und das Bremspedal in dem entfernten Cockpit niedergedrückt wird, des Anzeigebildes nach unten, wenn das Fahrzeug im D-Gang ist, und des Anzeigebildes nach oben, wenn das Fahrzeug im R-Gang ist; oder
ein drittes Verarbeitungssubmodul (9203), konfiguriert zum Bewegen, im fahrenden Zustand des Fahrzeugs, wenn das Fahrzeug im D-Gang ist und als Reaktion auf die Überwachung, dass das Lenkrad im entfernten Cockpit in eine bestimmte Richtung gedreht wird, des Anzeigebildes in die bestimmte Richtung, und Bewegen, wenn das Fahrzeug im R-Gang ist und als Reaktion auf die Überwachung, dass das Lenkrad im entfernten Cockpit in die bestimmte Richtung gedreht wird, des Anzeigebildes in eine Richtung entgegengesetzt zu der bestimmten Richtung.

12. Cockpit (110), das Folgendes umfasst:
einen Host (111);
ein Display (112); und
ein Fahrzeugsteuermodul (113),
wobei der Host (111) konfiguriert ist zum: Erfassen eines Fahrzeugzustands und eines von einem Fahrzeug hochgeladenen Originalbildes, Verarbeiten des Originalbildes und Anzeigen des verarbeiteten Originalbildes als ein Anzeigebild auf dem Display (112) des Cockpits (110); und
Durchführen verschiedener Bewegungsverarbeitungen an dem Anzeigebild auf dem Display (112) auf der Basis des Fahrzeugzustands und überwachter verschiedener Zustände des Fahrzeugsteuermoduls (113) in dem Cockpit (110); und
wobei das Display (112) zum Anzeigen des Anzeigebildes konfiguriert ist.

13. Cockpit (110) nach Anspruch 12, wobei das Fahrzeugsteuermodul (113) ein Lenkrad, ein Gaspedal und ein Bremspedal umfasst; und
der Host (111) konfiguriert ist zum Bewegen, in einem fahrenden Zustand oder einem stationären Zustand des Fahrzeugs, als Reaktion auf die Überwachung, dass das Lenkrad im Cockpit (110) geradeaus gehalten und das Gaspedal im Cockpit (110) niedergedrückt wird, des Anzeigebildes nach oben, wenn das Fahrzeug in einem D-Gang ist, und des Anzeigebildes nach unten, wenn das Fahrzeug in einem R-Gang ist; oder Bewegen, im fahrenden Zustand des Fahrzeugs, als Reaktion auf die Überwachung, dass das Lenkrad im Cockpit (110) geradeaus gehalten und das Bremspedal im Cockpit (110) niedergedrückt wird, des Anzeigebildes nach unten, wenn das Fahrzeug im D-Gang ist, und des Anzeigebildes nach oben, wenn das Fahrzeug im R-Gang ist; oder im fahrenden Zustand des Fahrzeugs, Bewegen, wenn das Fahrzeug im D-Gang ist und als Reaktion auf die Überwachung, dass das Lenkrad im Cockpit (110) in eine bestimmte Richtung gedreht wird, des Anzeigebildes in die bestimmte Richtung, und Bewegen, wenn das Fahrzeug im R-Gang ist und als Reaktion auf die Überwachung, dass das Lenkrad im Cockpit (110) in die bestimmte Richtung gedreht wird, des Anzeigebildes in eine Richtung entgegengesetzt zu der bestimmten Richtung.

14. Fernsteuerungssystem (120), das ein Fahrzeug (121) und das Cockpit (110) nach Anspruch 12 oder 13 umfasst.

15. Nichtflüchtiges maschinenlesbares Speichermedium mit darauf gespeicherten ausführbaren Codes, wobei die ausführbaren Codes bei Ausführung durch einen Prozessor eines elektronischen Geräts bewirken, dass der Prozessor das Verfahren nach einem der Ansprüche 1 bis 9 durchführt.

## Revendications

1. Procédé de traitement d'un affichage d'image d'un poste de pilotage à distance, comprenant :
une obtention d'un état de véhicule et d'une image d'origine chargée par un véhicule, un traitement de l'image d'origine, et un affichage de l'image d'origine traitée à titre d'image d'affichage dans un affichage du poste de pilotage à distance ; et
le procédé est **caractérisé par** une réalisation de différents traitements de déplacement sur l'image d'affichage dans l'affichage du poste de pilotage à distance sur la base de l'état de véhicule et de différents états suivis d'un module de commande de véhicule dans le poste de pilotage à distance.

2. Procédé selon la revendication 1, dans lequel le module de commande de véhicule comprend un volant, une pédale d'accélérateur et une pédale de frein.

3. Procédé selon la revendication 2, dans lequel ledit traitement de l'image d'origine, et affichage de l'image d'origine traitée à titre d'image d'affichage dans l'affichage du poste de pilotage à distance comprend :
un affichage d'une image d'une région spécifique de l'image d'origine à titre d'image d'affichage dans l'affichage du poste de pilotage à distance.

4. Procédé selon la revendication 3, dans lequel ladite réalisation des différents traitements de déplacement sur l'image d'affichage dans l'affichage du poste de pilotage à distance sur la base de l'état de véhicule et des différents états suivis du module de commande de véhicule dans le poste de pilotage à distance comprend :
dans un état de marche ou un état stationnaire du véhicule, en réponse à un suivi du fait que le volant dans le poste de pilotage à distance est maintenu tout droit et que la pédale d'accélérateur dans le poste de commande à distance est enfoncée, un déplacement de l'image d'affichage vers le haut lorsque le véhicule est en position D, et un déplacement de l'image d'affichage vers le bas lorsque le véhicule est en position R ; ou
dans un état de marche du véhicule, en réponse à un suivi du fait que le volant dans le poste de pilotage à distance est maintenu tout droit et que la pédale de frein dans le poste de commande à distance est enfoncée, un déplacement de l'image d'affichage vers le bas lorsque le véhicule est en position D, et un déplacement de l'image d'affichage vers le haut lorsque le véhicule est en position R ; ou
dans l'état de marche du véhicule, un déplacement, lorsque le véhicule est en position D et en réponse à un suivi du fait que le volant dans le poste de pilotage à distance est tourné dans une direction définie, de l'image d'affichage dans la direction définie, et un déplacement, lorsque le véhicule est en position R et en réponse à un suivi du fait que le volant dans le poste de pilotage à distance est tourné dans la direction définie, de l'image d'affichage dans une direction opposée à la direction définie.

5. Procédé selon la revendication 4, comprenant en outre :
après l'enfoncement de la pédale d'accélérateur, un arrêt du déplacement de l'image d'affichage lorsqu'une position de la pédale d'accélérateur est maintenue, et un déplacement de l'image d'affichage le long d'une trajectoire de déplacement historique dans une direction inverse lorsque la pédale d'accélérateur est relâchée ; ou
après l'enfoncement de la pédale de frein, un arrêt du déplacement de l'image d'affichage lorsqu'une position de la pédale de frein est maintenue, un déplacement de l'image d'affichage le long d'une trajectoire de déplacement historique dans une direction inverse lorsque la pédale de frein est relâchée et que le véhicule est toujours dans l'état de marche, un arrêt du déplacement de l'image d'affichage lorsque le véhicule est entré dans un état d'arrêt, et un rétablissement direct de l'image d'affichage à un état initial lorsque la pédale de frein est complètement relâchée ; ou
après la rotation du volant dans la direction définie, un arrêt du déplacement de l'image d'affichage lorsqu'une position du volant est maintenue, et un déplacement de l'image d'affichage le long d'une trajectoire de déplacement historique dans une direction inverse lorsque le volant est replacé dans une direction opposée.

6. Procédé selon la revendication 4, dans lequel
lorsque la pédale d'accélérateur est totalement enfoncée, un bord supérieur de l'image d'affichage coïncide avec un bord supérieur de l'image d'origine lorsque le véhicule est en position D, et un bord inférieur de l'image d'affichage coïncide avec un bord inférieur de l'image d'origine lorsque le véhicule est en position R ; ou
lorsque la pédale de frein est totalement enfoncée, le bord inférieur de l'image d'affichage coïncide avec le bord inférieur de l'image d'origine lorsque le véhicule est en position D, et le bord supérieur de l'image d'affichage coïncide avec le bord supérieur de l'image d'origine lorsque le véhicule est en position R ; ou
lorsque le volant est tourné dans la direction définie d'un angle maximum, un bord de l'image d'affichage dans la direction définie coïncide avec un bord de l'image d'origine dans la direction définie lorsque le véhicule est en position D, et le bord de l'image d'affichage dans la direction définie coïncide avec un bord de l'image d'origine dans une direction opposée à la direction définie lorsque le véhicule est en position R.

7. Procédé selon l'une quelconque des revendications 4 à 6, dans lequel
dans l'état de marche du véhicule, lorsque le volant et la pédale d'accélérateur se déplacent simultanément, une quantité de déplacement de l'image d'affichage est une somme d'un vecteur d'une quantité de déplacement du volant et d'un vecteur d'une quantité de déplacement de la pédale d'accélérateur ; ou
dans l'état de marche du véhicule, lorsque le volant et la pédale de frein se déplacent simultanément, une quantité de déplacement de l'image d'affichage est une somme d'un vecteur d'une quantité de déplacement du volant et d'un vecteur d'une quantité de déplacement de la pédale de frein.

8. Procédé selon l'une quelconque des revendications 3 à 6, dans lequel une durée de déplacement de l'image d'affichage est égale à une durée de changement d'état du volant, de la pédale d'accélérateur, ou de la pédale de frein.

9. Procédé selon l'une quelconque des revendications 3 à 6, comprenant en outre :
une déformation, une rotation, ou une mise à l'échelle de l'image d'affichage lorsque l'image d'affichage se déplace.

10. Appareil (90, 100) de traitement d'un affichage d'image d'un poste de pilotage à distance, comprenant :
un module d'obtention et d'affichage (910) configuré pour obtenir un état de véhicule et une image d'origine chargée par un véhicule, traiter l'image d'origine, et afficher l'image d'origine traitée à titre d'image d'affichage dans un affichage du poste de pilotage à distance ; et
l'appareil est **caractérisé par** un module de traitement (920) configuré pour réaliser différents traitements de déplacement sur l'image d'affichage dans l'affichage du poste de pilotage à distance sur la base de l'état de véhicule obtenu par le module d'obtention et d'affichage (910) et de différents états suivis d'un module de commande de véhicule dans le poste de pilotage à distance.

11. Appareil selon la revendication 10, dans lequel le module de commande de véhicule comprend un volant, une pédale d'accélérateur et une pédale de frein, et le module de traitement (920) comprend :
un premier sous-module de traitement (9201) configuré pour, dans un état de marche ou un état stationnaire du véhicule, en réponse à un suivi du fait que le volant dans le poste de pilotage à distance est maintenu tout droit et que la pédale d'accélérateur dans le poste de commande à distance est enfoncée, déplacer l'image d'affichage vers le haut lorsque le véhicule est en position D, et déplacer l'image d'affichage vers le bas lorsque le véhicule est en position R ; ou
un deuxième sous-module de traitement (9202) configuré pour, dans un état de marche du véhicule, en réponse à un suivi du fait que le volant dans le poste de pilotage à distance est maintenu tout droit et que la pédale de frein dans le poste de commande à distance est enfoncée, déplacer l'image d'affichage vers le bas lorsque le véhicule est en position D, et déplacer l'image d'affichage vers le haut lorsque le véhicule est en position R ; ou
un troisième sous-module de traitement (9203) configuré pour, dans l'état de marche du véhicule, déplacer, lorsque le véhicule est en position D et en réponse à un suivi du fait que le volant dans le poste de pilotage à distance est tourné dans une direction définie, l'image d'affichage dans la direction définie, et déplacer, lorsque le véhicule est en position R et en réponse à un suivi du fait que le volant dans le poste de pilotage à distance est tourné dans la direction définie, l'image d'affichage dans une direction opposée à la direction définie.

12. Poste de pilotage (110), comprenant :
un hôte (111) ;
un affichage (112) ; et
un module de commande de véhicule (113),
dans lequel l'hôte (111) est configuré pour : obtenir un état de véhicule et une image d'origine chargée par un véhicule, traiter l'image d'origine, et afficher l'image d'origine traitée à titre d'image d'affichage dans l'affichage (112) du poste de pilotage (110) ; et
réaliser différents traitements de déplacement sur l'image d'affichage dans l'affichage (112) sur la base de l'état de véhicule et de différents états surveillés du module de commande de véhicule (113) dans le poste de pilotage (110) ; et
l'affichage (112) est configuré pour afficher l'image d'affichage.

13. Poste de pilotage (110) selon la revendication 12, dans lequel le module de commande de véhicule (113) comprend un volant, une pédale d'accélérateur, et une pédale de frein ; et
l'hôte (111) est configuré pour, dans un état de marche ou un état stationnaire du véhicule, en réponse à un suivi du fait que le volant dans le poste de pilotage (110) est maintenu tout droit et que la pédale d'accélérateur dans le poste de pilotage (110) est enfoncée, déplacer l'image d'affichage vers le haut lorsque le véhicule est en position D, et déplacer l'image d'affichage vers le bas lorsque le véhicule est en position R ; ou dans l'état de marche du véhicule, en réponse à un suivi du fait que le volant dans le poste de pilotage (110) est maintenu tout droit et que la pédale de frein dans le poste de pilotage (110) est enfoncée, déplacer l'image d'affichage vers le bas lorsque le véhicule est en position D, et déplacer l'image d'affichage vers le haut lorsque le véhicule est en position R ; ou dans l'état de marche du véhicule, déplacer, lorsque le véhicule est en position D et en réponse à un suivi du fait que le volant dans le poste de pilotage (110) est tourné dans une direction définie, l'image d'affichage dans la direction définie, et déplacer, lorsque le véhicule est en position R et en réponse à un suivi du fait que le volant dans le poste de pilotage (110) est tourné dans la direction définie, l'image d'affichage dans une direction opposée à la direction définie.

14. Système de conduite à distance (120), comprenant un véhicule (121) et le poste de pilotage (110) selon la revendication 12 ou 13.

15. Support de stockage lisible par machine non transitoire présentant des codes exécutables stockés dessus, dans lequel les codes exécutables, lorsqu'ils sont exécutés par un processeur d'un dispositif électronique, amènent le processeur à réaliser le procédé selon l'une quelconque des revendications 1 à 9.
